(19) Europäisches Patentamt
European Patent Office
Office européen des brevets

(11) **EP 1 459 920 B1**

(12) **FASCICULE DE BREVET EUROPEEN**

(45) Date de publication et mention
de la délivrance du brevet:
**02.07.2008 Bulletin 2008/27**

(51) Int Cl.:
***B60H 1/32*** *(2006.01)*

(21) Numéro de dépôt: **04005882.8**

(22) Date de dépôt: **12.03.2004**

(54) **Installation de climatisation de véhicule pour fluide supercritique**

Klimaanlage eines Fahrzeugs für ein überkritisches Kühlmittel

Motor vehicle air conditioning for a supercritical refrigerant

(84) Etats contractants désignés:
**AT BE BG CH CY CZ DE DK EE ES FI GB GR HU IE IT LI LU MC NL PL PT RO SE SI SK TR**

(30) Priorité: **19.03.2003 FR 0303362**

(43) Date de publication de la demande:
**22.09.2004 Bulletin 2004/39**

(73) Titulaire: **VALEO SYSTEMES THERMIQUES**
**78320 Le Mesnil Saint-Denis (FR)**

(72) Inventeur: **Ben Yahia, Mohamed**
**75005 Paris (FR)**

(56) Documents cités:
**DE-A- 3 836 989        FR-A- 2 711 731**
**FR-A- 2 801 842**

**Description**

L'invention concerne les circuits de climatisation des véhicules à moteur.

Dans les véhicules à moteur classiques, le compresseur du circuit de climatisation est entraîné par le moteur et consomme donc une partie de la puissance du moteur. La puissance absorbée par le compresseur, quand il est en marche, diminue le rendement du moteur, et par suite, augmente la consommation de carburant et la pollution générée par les gaz d'échappement du véhicule. Cet inconvénient est en particulier gênant pour les compresseurs mécaniques à contrôle externe, dont l'utilisation se généralise.

Par ailleurs, dans des réalisations existantes, le calculateur d'injection du véhicule ne dispose pas de la valeur instantanée de la puissance réellement absorbée par le compresseur et choisit donc, pour le fonctionnement du compresseur, des paramètres d'injection par défaut correspondant à la valeur maximale de la puissance absorbée, valeur qui est rarement atteinte en pratique.

Par conséquent, une solution pour optimiser le rendement du moteur consiste à estimer la valeur instantanée de cette puissance réellement absorbée par le compresseur. La connaissance de cette information peut alors permettre d'adapter les paramètres d'injection du moteur aux besoins réels.

La demande de brevet français n°01 16568, qui est considérée comme l'art antérieur le plus proche, propose une installation de climatisation propre à estimer le débit d'un fluide frigorigène sous-critique dans un circuit de climatisation pour calculer la puissance instantanée absorbée par le compresseur à partir de cette estimation.

L'installation décrite dans la demande de brevet français n°01 16568 comprend des organes de mesures permettant d'établir des valeurs relatives à la température du flux d'air extérieur à l'entrée du condenseur et à la pression du fluide frigorigène en sortie du compresseur. L'installation comprend en outre une carte électronique qui met en oeuvre une équation pour calculer une estimation du débit de fluide frigorigène dans le circuit de climatisation à partir des valeurs de la température du flux d'air extérieur soufflé à l'entrée du condenseur, et de la haute pression.

L'estimation du débit de fluide frigorigène proposée par cette installation s'adapte mal aux fluides supercritiques et ne permet pas d'estimer leur débit avec une précision satisfaisante.

L'utilisation des fluides frigorigènes supercritiques, tel que le $CO_2$, s'est développée dans les circuits de climatisation des véhicules pour limiter les effets néfastes des fluides frigorigènes sur l'environnement. Les fluides frigorigènes supercritiques possèdent en effet un potentiel de réchauffement de la planète nettement inférieur à celui des fluides frigorigènes sous-critiques tels que les composés fluorés.

Un circuit de climatisation utilisant un fluide supercritique comporte un compresseur, un refroidisseur de gaz ("gas cooler"), un échangeur thermique interne, un organe de détente et un évaporateur parcourus, dans cet ordre, par le fluide frigorigène. Dans un tel circuit, le refroidissement du fluide après compression n'entraîne pas de changement de phase. Le fluide ne passe à l'état liquide qu'au cours de la détente. Cette propriété des fluides supercritiques ne permet pas d'utiliser l'installation de la demande de brevet n°01 16568 pour estimer le débit de fluide supercritique et la puissance consommée par le compresseur.

C'est donc un but de l'invention de proposer une installation de climatisation permettant d'estimer le débit d'un fluide frigorigène supercritique, avec une précision satisfaisante.

C'est encore un but de l'invention de fournir une telle estimation du débit de fluide frigorigène supercritique à partir de grandeurs représentatives du fonctionnement du refroidisseur de gaz.

A cet effet, l'invention propose une installation de climatisation pour véhicule à moteur, munie d'un circuit de fluide frigorigène supercritique comprenant un compresseur, un refroidisseur de gaz de longueur totale donnée, un organe de détente et un évaporateur, le refroidisseur de gaz recevant un flux d'air passant par un groupe moto-ventilateur. L'installation comprend en outre un dispositif électronique de contrôle destiné à interagir avec le circuit de fluide frigorigène, pour estimer une grandeur relative au fluide frigorigène à partir de températures relatives au refroidisseur de gaz. Avantageusement, le dispositif électronique de contrôle comprend une fonction de calcul utilisant deux écarts de température, dont l'un au moins est fondé sur la température du fluide frigorigène en un point intermédiaire choisi du refroidisseur de gaz.

Selon une caractéristique de l'invention, le point intermédiaire choisi est situé à une distance de l'entrée du refroidisseur de gaz, comprise entre 5 % et 35% de la longueur totale du refroidisseur de gaz.

Selon une autre caractéristique de l'invention, les deux écarts de température sont en outre fondés sur :

- la température du fluide frigorigène à l'entrée du refroidisseur de gaz,
- la température du flux d'air reçu par le refroidisseur de gaz.

Dans un mode de réalisation particulier, la grandeur relative au fluide frigorigène est le débit massique du fluide frigorigène.

Selon ce mode de réalisation particulier, les deux écarts de températures utilisés par la fonction de calcul comprennent :

- l'écart entre la température du fluide frigorigène à l'entrée du refroidisseur de gaz et la température du flux d'air reçu par le refroidisseur de gaz;
- l'écart entre la température du fluide frigorigène au point intermédiaire choisi du refroidisseur de gaz et la température du flux d'air reçu par le refroidisseur de gaz.

L'invention propose également un procédé d'estimation du débit massique d'un fluide frigorigène supercritique circulant dans un circuit de climatisation, ledit circuit comprenant un compresseur, un refroidisseur de gaz de longueur totale donnée, un organe de détente et un évaporateur, le refroidisseur de gaz recevant un flux d'air passant par un groupe moto-ventilateur. Avantageusement, le procédé comprend les étapes suivantes, pour une valeur initiale donnée du débit massique du fluide frigorigène :

a) calculer

- une estimation de l'écart entre la température du fluide frigorigène à l'entrée du refroidisseur de gaz et la température du flux d'air reçu par le refroidisseur de gaz;
- une estimation de l'écart entre la température du fluide frigorigène au point intermédiaire choisi du refroidisseur de gaz et la température du flux d'air reçu par le refroidisseur de gaz

b) calculer une grandeur de sortie, à partir d'une grandeur d'entrée et des valeurs fournies par l'étape a);
c) déterminer si l'écart entre la grandeur de sortie calculée à l'étape b) et la grandeur d'entrée est inférieure à une valeur de seuil prédéfinie.

En particulier, la grandeur d'entrée comprend la valeur initiale du débit de fluide frigorigène, à la première itération de l'étape a).

Selon un aspect de l'invention, les étapes a) à c) sont réitérées avec une grandeur d'entrée égale à la grandeur de sortie calculée à l'étape c) précédente, si l'étape c) n'est pas vérifiée.

Selon un autre aspect de l'invention, la grandeur de sortie comprend la valeur du débit massique de fluide frigorigène, si l'étape c) est vérifiée.

L'invention couvre également un programme-produit, qui peut être défini comme comprenant les fonctions mises en oeuvre pour estimer le débit de fluide frigorigène.

D'autres caractéristiques et avantages de l'invention apparaîtront à l'examen de la description détaillée ci-après, et des dessins annexés sur lesquels:

- la figure la est un schéma d'un circuit de climatisation de véhicule automobile à moteur, fonctionnant avec un fluide supercritique,
- la figure 1b est un schéma d'une installation de climatisation de véhicule automobile à moteur, selon l'invention,
- la figure 2 est un diagramme thermodynamique dans lequel est représentée l'évolution de la pression du fluide $CO_2$ en fonction de son enthalpie, durant un cycle,
- la figure 3 est un schéma du refroidisseur de gaz,
- la figure 4 représente l'évolution de la température le long du refroidisseur de gaz,
- la figure 5 est un organigramme illustrant les différentes étapes mises en oeuvre par l'installation selon une première forme de réalisation selon l'invention,
- les figures 6 à 9 représentent l'évolution de l'efficacité normale en fonction du débit de fluide $CO_2$, pour différentes valeurs du débit d'air reçu par le refroidisseur de gaz, selon l'invention, et
- les figures 10 et 11 représentent l'évolution de l'efficacité normale en fonction du débit de fluide $CO_2$, pour différentes valeurs du débit de l'air entrant dans le refroidisseur de gaz.

Les annexes A, B et C comportent des équations mathématiques principales utilisées pour mettre en oeuvre l'installation.

Les dessins contiennent, pour l'essentiel, des éléments de caractère certain. Ils pourront donc non seulement servir à mieux faire comprendre la description, mais aussi contribuer à la définition de l'invention, le cas échéant.

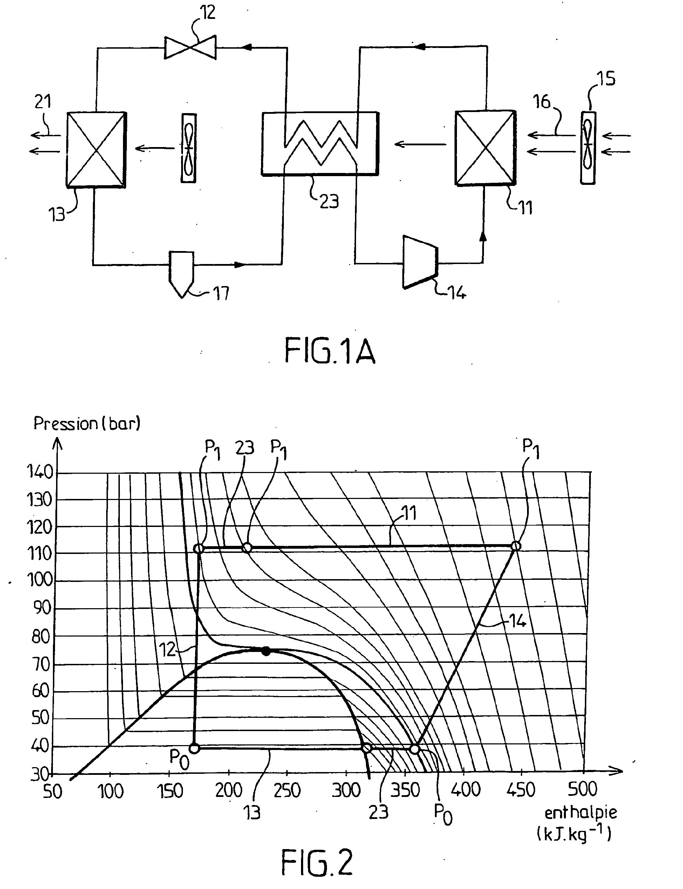

En référence à la figure 1a, l'installation de climatisation selon l'invention comporte un circuit de climatisation parcouru par un fluide frigorigène supercritique. Par la suite, la description sera faite en référence au fluide frigorigène supercritique $CO_2$, à titre d'exemple non limitatif.

La description du circuit de climatisation ci-après sera également faite en référence au diagramme de la figure 2 représentant l'évolution de la pression du fluide $CO_2$ en fonction de son enthalpie.

Un circuit fonctionnant en mode supercritique comporte:

- un compresseur 14 propre à recevoir le fluide à l'état gazeux à une pression P0 et à le comprimer jusqu'à la pression P1,
- un refroidisseur de gaz 11 ("gaz cooler") propre à refroidir le gaz comprimé par le compresseur, à pression P1 sensiblement constante,
- un organe de détente 12 propre à abaisser la pression du fluide issu du refroidisseur de gaz 11 de la pression P1 jusqu'à la pression P0, en l'amenant au moins en partie à l'état liquide, et
- un évaporateur 13 propre à faire passer le fluide à l'état liquide provenant de l'organe de détente à l'état gazeux, à pression sensiblement constante P0, pour produire un flux d'air climatisé 21 qui est envoyé vers l'habitacle du véhicule.

Le circuit peut comporter en outre un échangeur thermique interne 23, permettant au fluide circulant du refroidisseur de gaz vers le détendeur de céder de la chaleur au fluide circulant de l'évaporateur vers le compresseur. Le circuit peut en outre comporter un accumulateur 17 placé entre la sortie de l'évaporateur et l'entrée du compresseur pour éviter les coups de liquide.

Le refroidisseur de gaz 11 reçoit un flux d'air extérieur 16 pour évacuer la chaleur prélevée dans l'habitacle, qui dans certaines conditions de fonctionnement est mis en mouvement par un groupe moto-ventilateur 15.

L'évaporateur 13 reçoit un flux d'air d'un pulseur alimenté par un flux d'air extérieur pour produire un flux d'air climatisé 21.

L'organe de détente 12 peut être par exemple une vanne électrique ou un orifice calibré.

Dans un circuit de climatisation fonctionnant en mode supercritique, le fluide frigorigène supercritique est refroidi par l'air avec lequel il échange de la chaleur, dans le refroidisseur de gaz 11, mais l'échange n'est pas effectué de manière isotherme, comme cela se produit pour un fluide sous-critique circulant dans un condenseur.

Plus précisément, le fluide frigorigène supercritique est comprimé en phase gazeuse et amené à une pression élevée P1 par le compresseur 14. Le refroidisseur de gaz 11 refroidit ensuite le fluide frigorigène grâce au flux d'air entrant 16. A la différence des circuits de climatisation fonctionnant avec un fluide sous-critique, le refroidissement du fluide après compression n'entraîne pas de changement de phase. Le fluide ne passe à l'état liquide qu'au cours de la détente. L'échangeur thermique interne 23 permet de refroidir très fortement, voire de liquéfier le fluide sortant du refroidisseur de gaz.

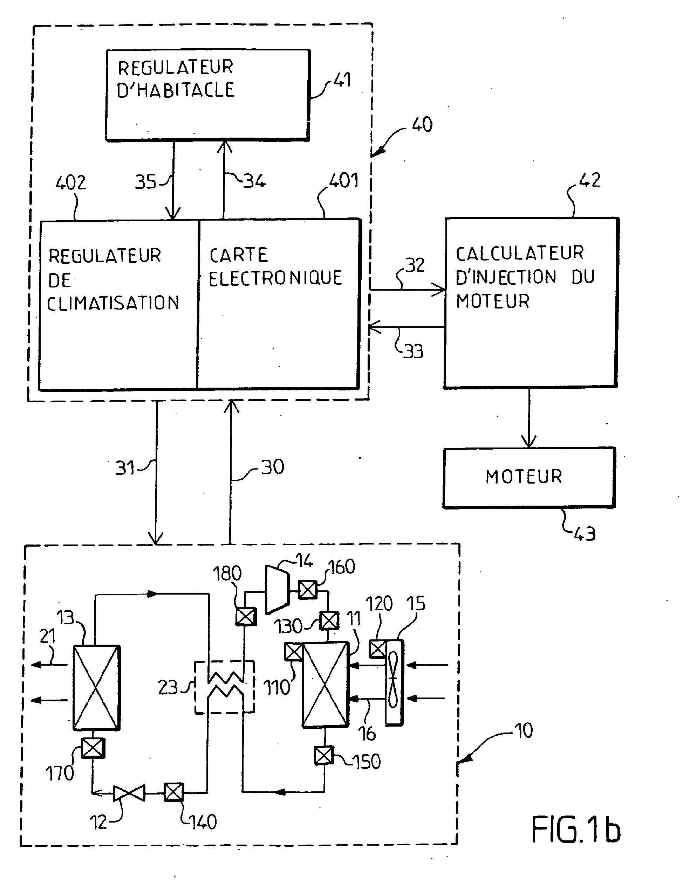

On se réfère maintenant à la figure 1b qui représente une installation, selon un premier mode de réalisation de l'invention, mise en place dans un véhicule automobile, éventuellement en mouvement selon une vitesse d'avancement Va.

Le véhicule automobile est animé par un moteur 43, qui peut être commandé par un calculateur d'injection 42. Le calculateur d'injection 42 reçoit des informations de divers capteurs qu'il interprète pour ajuster les paramètres d'injection.

Le calculateur d'injection 42 peut en outre fournir des informations sur les conditions intérieures ou extérieures du véhicule (informations fournies par un capteur solaire, nombre d'occupants, etc.). En particulier, il peut fournir des informations sur des valeurs instantanées relatives au fonctionnement du véhicule, et notamment sur la vitesse de rotation du compresseur N.

Le véhicule est également équipé de l'appareil de climatisation 10 décrit ci-dessus, représentée schématiquement sur la figure 1b.

De plus, l'installation est munie d'un calculateur de climatisation 40, comprenant un régulateur d'habitacle 41 et un régulateur de boucle de climatisation 402. Le régulateur d'habitacle 41 est destiné à fixer la consigne de température de l'air extérieur soufflé à l'entrée de l'évaporateur 13.

Le calculateur d'injection du moteur peut agir sur l'appareil de climatisation grâce à un régulateur de climatisation 402. Cette liaison peut interdire la mise en marche de l'appareil de la climatisation lorsque le moteur est fortement sollicité.

La Demanderesse propose d'optimiser le fonctionnement d'une telle installation de climatisation fonctionnant en mode supercritique, en fournissant, avec une précision satisfaisante, une estimation d'une grandeur relative au fluide frigorigène, en particulier du débit massique de fluide frigorigène, à partir de températures relatives au refroidisseur de gaz.

La demande de brevet n°01 16568 évoquée précédemment s'applique aux circuits de climatisation fonctionnant en mode sous-critique et propose une estimation du débit massique de fluide frigorigène à partir de :

- l'écart $\Delta=T_k-T_{ai}$ entre la température de condensation $T_k$ et la température de l'air reçu par le condenseur Tai,
- de la vitesse d'avancement du véhicule Va, et
- de la tension du groupe moto-ventilateur $U_{gmv}$.

Une solution analogue pour un circuit fonctionnant en mode supercritique reviendrait à estimer le débit massique d'un fluide frigorigène supercritique en fonction du pincement $\Delta=T_{gco}-T_{ai}$, qui représente l'écart entre la température

$T_{gco}$ en sortie du refroidisseur de gaz et la température de l'air reçu par ce dernier $T_{ai}$.

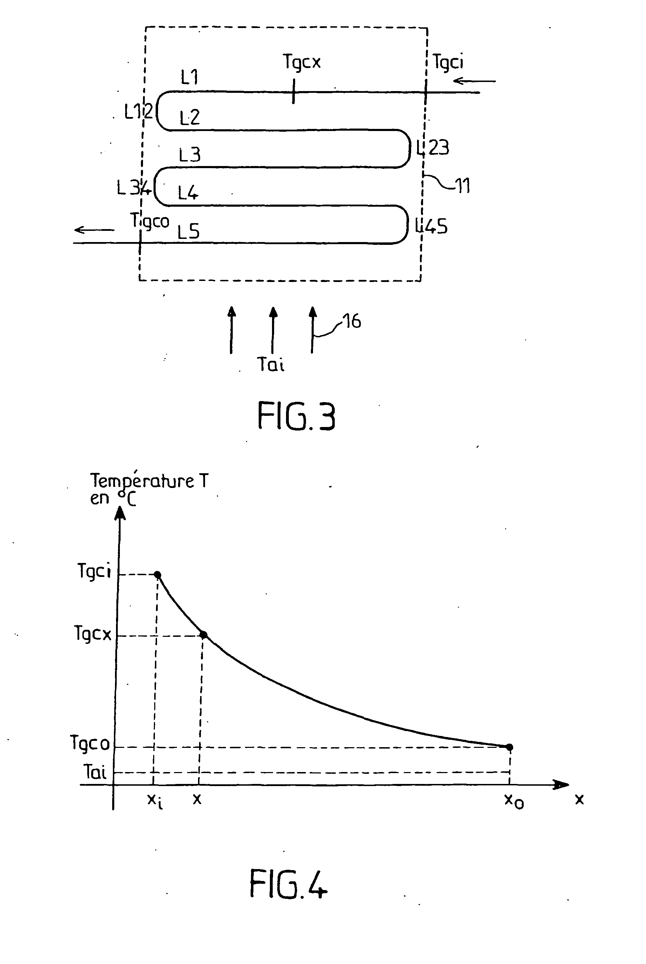

Or cette solution fournit des résultats peu précis, en raison des propriétés spécifiques des circuits fonctionnant en mode supercritique. En effet, ce manque de précision résulte du fait que l'échange de chaleur au niveau du refroidisseur de gaz n'est pas isotherme et en particulier au faible écart de température entre la sortie du refroidisseur de gaz et l'air de refroidissement. En outre, lorsque le véhicule est à l'arrêt, un retour d'air chaud peut se produire dans le refroidisseur de gaz, ce qui nuit encore à l'estimation. Ce faible écart de température entre la sortie du refroidisseur de gaz et l'air de refroidissement est illustré sur la figure 3 en relation avec la figure 4.

La figure 3 est un schéma d'un refroidisseur de gaz sur lequel sont représentées :

- un point $x_i$ à l'entrée du refroidisseur de gaz, au niveau duquel le fluide frigorigène est à la température $T_{gci}$,
- un point intermédiaire x, choisi entre l'entrée $x_i$ et la sortie $x_o$ du refroidisseur de gaz, dont le positionnement sera détaillé ci-après. Au niveau de ce point, le fluide frigorigène est à la température $T_{gcx}$, et
- un point $x_o$ à la sortie du refroidisseur de gaz, au niveau duquel le fluide frigorigène est à la température $T_{gco}$.

Le refroidisseur de gaz 11 a une longueur totale L entre son entrée $x_i$ et sa sortie $x_o$. Cette longueur L correspond à la longueur développée du refroidisseur de gaz 11, c'est-à-dire à la somme des longueurs des différentes branches qui le composent. Par exemple, sur la figure 3, la longueur totale L est égale à la somme des longueurs des branches horizontales L1, L2, L3, L4, L5 et des branches de raccord verticales $L_{12}$, $L_{23}$, $L_{34}$, et $L_{45}$.

Le flux d'air reçu par le refroidisseur de gaz 16 est également représenté sur la figure 3 avec une température $T_{ai}$.

La figure 4 représente un exemple d'évolution de la température du fluide frigorigène CO2 dans le refroidisseur de gaz 11 en fonction de la position où est mesurée cette température sur le refroidisseur de gaz.

Cette figure montre que l'écart entre la température $T_{gco}$ du fluide frigorigène en sortie $x_o$ du refroidisseur de gaz 11 et la température $T_{ai}$ de l'air entrant 16 est faible. Par suite, une estimation du débit massique d'un fluide frigorigène à partir de cet écart $\Delta = T_{gco} - T_{ai}$, de manière analogue au brevet n°01 16568 précité, n'est pas suffisamment précise.

L'invention propose une estimation du débit massique de fluide frigorigène fondée sur un bilan énergétique optimisé sur le refroidisseur de gaz.

Le bilan énergétique au niveau du refroidisseur de gaz peut être optimisé lorsque les deux conditions suivantes sont réalisées :

- l'écart ($T_{gci} - T_{gcx}$), lié au bilan sur le fluide C02, est maximal, et
- l'écart ($T_{gcx} - T_{ai}$), lié au bilan sur l'air, est maximal.

Lorsque $x = x_i$, l'écart ($T_{gcx} - T_{ai}$) est maximal, alors que l'écart ($T_{gci} - T_{gcx}$) est minimal. Au contraire, lorsque $x = x_o$, l'écart ($T_{gci} - T_{gcx}$) est maximal alors que l'écart ($T_{gcx} - T_{ai}$) est minimal. Il existe une valeur de x qui permet de vérifier les deux conditions à la fois.

La Demanderesse a trouvé que ces deux conditions sont simultanément réalisées lorsque le point x est un point intermédiaire choisi du refroidisseur de gaz.

Plus précisément, le bilan énergétique est optimal lorsque ce point est situé à une distance D de l'entrée $x_i$, comprise entre 5% et 35% de la longueur totale L du refroidisseur de gaz.

En particulier, la distance D=15% de la longueur L fournit un bilan énergétique optimal.

L'installation de climatisation selon l'invention exploite cette optimisation du bilan énergétique pour estimer une grandeur relative au fluide frigorigène, en particulier le débit massique de fluide frigorigène $m_{CO2}$. Cette estimation est obtenue à partir de deux écarts de températures relatives au refroidisseur de gaz, dont l'un au moins est fondé sur la température du fluide frigorigène $T_{gcx}$ au point intermédiaire choisi x du refroidisseur de gaz.

Les températures relatives au refroidisseur de gaz comprennent en outre :

- la température $T_{gci}$ du fluide frigorigène, à l'entrée du refroidisseur de gaz, et
- la température $T_{ai}$ de l'air 16 reçu par le refroidisseur de gaz.

L'installation de climatisation comprend un dispositif électronique de contrôle, par exemple une carte électronique 401 destinée à interagir avec le circuit de climatisation 10, via les liaisons 30/31, et le calculateur d'injection 42, via les liaisons 32/33, pour estimer la grandeur relative au fluide frigorigène. La description ci-après sera faite en référence à l'estimation du débit massique de fluide frigorigène $m_{CO2}$, comme exemple non limitatif de grandeur relative au fluide frigorigène.

La carte électronique 401 peut-être considérée comme partie intégrante du calculateur de climatisation 40 du véhicule.

La carte électronique 401 comprend une fonction de calcul qui utilise deux écarts de températures relatives au fluide frigorigène, dont l'un au moins est fondé sur la température du fluide frigorigène $T_{gcx}$ au point intermédiaire choisi x du refroidisseur de gaz.

La carte électronique 401 peut récupérer des informations 30 provenant de capteurs mis en place sur le circuit de climatisation 10. Elle peut recevoir également des informations du calculateur d'injection du moteur 42 par la liaison 33, en particulier la vitesse d'avancement du véhicule Va, la tension du groupe moto-ventilateur $U_{gmv}$, la vitesse de rotation du compresseur N et la température de l'air extérieur $T_{ext}$.

Dans une première forme de réalisation, la fonction de calcul de la carte électronique utilise les deux écarts de températures suivants :

- l'écart entre la température du fluide frigorigène à l'entrée du refroidisseur de gaz $T_{gci}$ et la température du flux d'air reçu par le refroidisseur de gaz $T_{ai}$;
- l'écart entre la température du fluide frigorigène $T_{gcx}$ au point intermédiaire choisi du refroidisseur de gaz x et la température du flux d'air reçu par le refroidisseur de gaz $T_{ai}$.

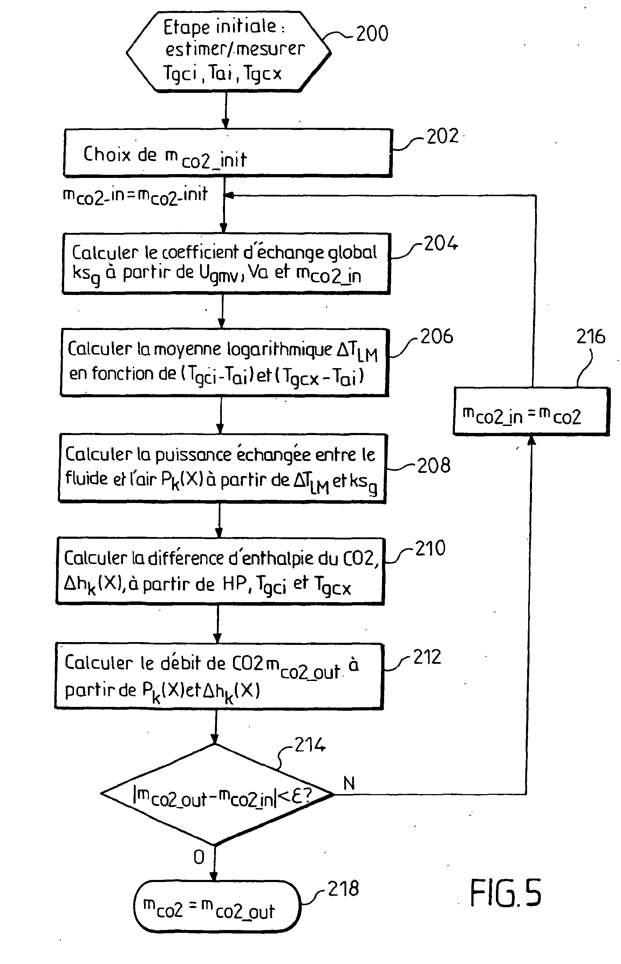

La figure 5 représente les différentes étapes mises en oeuvre par la carte électronique pour estimer le débit de fluide frigorigène $m_{CO2}$, selon la première forme de réalisation de l'invention.

Selon cette première forme de réalisation, le dispositif électronique de contrôle 401 est agencé pour appeler itérativement la fonction de calcul, à partir d'une valeur initiale donnée du débit massique du fluide frigorigène $m_{CO2\_int}$, Jusqu'à satisfaire un critère de fin d'itération, comprenant une condition de seuil sur l'écart entre la grandeur d'entrée $m_{CO2\_in}$ et la grandeur de sortie de la fonction de calcul $m_{CO2\_out}$.

Ainsi, à l'étape 200, l'installation estime ou mesure les valeurs de la température du fluide frigorigène à l'entrée du refroidisseur de gaz $T_{gci}$, de la température $T_{ai}$ de l'air reçu par le refroidisseur de gaz 11 et de la température du fluide frigorigène $T_{gcx}$ au point intermédiaire choisi du refroidisseur de gaz.

Pour cela, l'installation comprend des organes de mesures propres à fournir ces grandeurs.

Plus précisément, la température du fluide frigorigène $T_{gci}$, à l'entrée du refroidisseur de gaz 11 peut être directement mesurée par une sonde 130 placée à l'entrée du refroidisseur de gaz.

En variante, la carte électronique peut comporter une fonction d'estimation de température de fluide capable de déterminer la température du fluide frigorigène $T_{gci}$ à l'entrée du refroidisseur de gaz 11 à partir de la pression P0 et de la température $T_{su}$ en entrée du compresseur et de la pression en sortie du compresseur P1.

La température $T_{su}$ peut être mesurée par la sonde 180 de la figure 1b placée en entrée du compresseur. En variante, la température $T_{su}$ peut également être estimée. Cette estimation sera détaillée lors de la description de la deuxième forme de réalisation de l'invention.

La température $T_{ai}$ de l'air reçu par le refroidisseur de gaz 11 peut être mesurée par une sonde de température 120, en référence à la figure 1b, placée entre le groupe moto-ventilateur 15 et le refroidisseur de gaz 11.

En variante, la carte électronique peut comporter une fonction d'estimation de température d'air capable de déterminer la température $T_{ai}$ de l'air reçu par le refroidisseur de gaz à partir de la vitesse d'avancement Va du véhicule et de la température de l'air extérieur $T_{ext}$ en entrée du groupe moto-ventilateur.

La vitesse d'avancement Va du véhicule et de la température de l'air extérieur $T_{ext}$ en entrée du groupe moto-ventilateur peuvent être fournies par le calculateur d'injection du moteur 42 et par le régulateur d'habitacle 41.

Selon cette variante, l'installation peut comprendre une sonde de température qui fournit une mesure de la température $T_{ext}$ de l'air extérieur au véhicule.

La température du fluide frigorigène $T_{gcx}$ peut être directement mesurée par une sonde 110 placée au point x choisi du refroidisseur de gaz.

A l'étape 202, la carte électronique 401 choisit une valeur initiale du débit de fluide frigorigène $m_{CO2\_init}$, par exemple $m_{CO2-init} = 100 kg/h$. Le choix de cette valeur peut être fondé sur des estimations ou des mesures antérieures du débit de fluide frigorigène.

La carte électronique appelle ensuite une première itération de la fonction de calcul avec une grandeur d'entrée $m_{CO2\_in}$ égale à la valeur initiale $m_{CO2\_init}$.

La fonction de calcul effectue les étapes 204 à 214 décrites ci-après.

Les étapes 204 à 208 fournissent une estimation de la puissance $P_k(x)$ échangée entre le fluide CO2 circulant dans la portion du refroidisseur de gaz, comprise entre $x_i$ et x, et l'air reçu à partir de :

- la grandeur d'entrée $m_{CO2\_in}$;
- l'écart entre la température du fluide frigorigène à l'entrée du refroidisseur de gaz $T_{gci}$ et la température du flux d'air reçu par le refroidisseur de gaz $T_{ai}$;
- l'écart entre la température du fluide frigorigène $T_{gcx}$ au point intermédiaire choisi du refroidisseur de gaz x et la température du flux d'air reçu par le refroidisseur de gaz $T_{ai}$.

Plus précisément, à l'étape 204, la fonction de calcul calcule le coefficient d'échange thermique global entre l'air et le fluide frigorigène supercritique $ks_g$ à partir du coefficient d'échange thermique côté air $ks_a$ et du coefficient d'échange thermique côté CO2, $ks_{CO2}$, selon l'équation A3.1 de l'annexe A.

Le coefficient d'échange thermique côté air $ks_a$ est une fonction du débit d'air refroidissant la portion du refroidisseur de gaz comprise entre l'entrée $x_i$ et le point intermédiaire x, et donc de la tension du groupe moto-ventilateur $U_{GMV}$ et de la vitesse d'avancement du véhicule $V_a$, selon la relation A3.21 de l'annexe A. Un exemple d'équation A3.22 est donnée dans l'annexe A, où a, b, c, d et e sont des constantes.

Le coefficient d'échange thermique côté CO2, $ks_{CO2}$, est une fonction du débit de CO2, selon la relation A3.31 de l'annexe A. Un exemple d'équation A3.32 est donné dans l'annexe A, où a' et b' sont des constantes qui dépendent de la technologie du refroidisseur de gaz et de ses caractéristiques. La grandeur d'entrée de la fonction de calcul $m_{CO2\_in}$ peut donc être utilisée pour calculer le coefficient $ks_{CO2}$.

A l'étape 206, la fonction de calcul détermine la moyenne logarithmique $\Delta T_{LM}$ de la différence de température globale, entre l'entrée du refroidisseur de gaz $x_i$ et le point x, à partir:

- de l'écart entre la température du fluide frigorigène à l'entrée du refroidisseur de gaz $T_{gci}$ et la température du flux d'air reçu par le refroidisseur de gaz $T_{ai}$;
- de l'écart entre la température du fluide frigorigène $T_{gcx}$ au point intermédiaire choisi du refroidisseur de gaz x et la température du flux d'air reçu par le refroidisseur de gaz $T_{ai}$.

Ces écarts sont estimés à partir des températures $T_{gci}$, $T_{gcx}$ et $T_{ai}$ obtenues à l'étape initiale 200. Le calcul de la moyenne logarithmique $\Delta T_{LM}$ en fonction des écarts de température précités est établi conformément à la relation A5 de l'annexe A.

A l'étape 208, la fonction de calcul détermine la puissance $P_k(x)$ échangée entre le fluide CO2 circulant dans la portion du refroidisseur de gaz, comprise entre $x_i$ et x, et l'air reçu. La puissance $P_k(x)$ est calculée à partir de la valeur de moyenne logarithmique $\Delta T_{LM}$ obtenue à l'étape 206, du coefficient d'échange thermique global $ks_g$ obtenu à l'étape 204, conformément à l'équation A2 de l'annexe A. La fonction de calcul utilise également le débit d'air $m_{ai}$ qui dépend de la tension du groupe moto-ventilateur $U_{gmv}$ et de la vitesse Va d'avancement du véhicule, ainsi que la capacité calorifique de l'air $Cp_a$.

À l'étape 210, la fonction de calcul détermine la valeur de la différence d'enthalpie $\Delta h_k(x)$, entre l'entrée $x_i$ du refroidisseur de gaz et le point x. Comme exprimé par la relation A4 de l'annexe A, cette valeur est calculée à partir de la température à l'entrée du refroidisseur de gaz $T_{gci}$, de la température au point x du refroidisseur de gaz $T_{gcx}$ et de la haute pression P 1 en sortie du compresseur.

La haute pression P1 peut par exemple être mesurée par le capteur 160 de la figure 1b. Ce capteur 160 qui mesure la valeur instantanée de la haute pression P1 peut-être placé à tout endroit approprié entre la sortie du compresseur et l'entrée du refroidisseur de gaz 11 ou entre la sortie du refroidisseur de gaz et l'entrée de l'organe de détente 12.

A partir de la valeur de la puissance $P_k(x)$ obtenue à l'étape 208 et de la valeur de la différence d'enthalpie $\Delta h_k(x)$ obtenue à l'étape 210, la fonction de calcul de la carte électronique 401 fournit la grandeur de sortie, $m_{CO2\_out}$, selon l'équation A1 de l'annexe A.

A l'étape 214, la carte électronique 401 détermine si le critère de fin d'itération est satisfait. Le critère de fin d'itération comprend une condition de seuil sur l'écart entre la grandeur de sortie $m_{CO2\_out}$ et la grandeur d'entrée $m_{CO2\_in}$ de la fonction de calcul.

Plus précisément, la carte électronique détermine si la différence entre l'écart entre la grandeur de sortie $m_{CO2\_out}$ et la grandeur d'entrée $m_{CO2\_in}$ est inférieure à une valeur de seuil prédéfinie ε. Cette valeur de seuil est très petite, par exemple, sensiblement égale à 5%.

Si c'est le cas, le critère de fin d'itération est satisfait et la grandeur de sortie $m_{CO2\_out}$ de la fonction de calcul comprend la valeur du débit de fluide $m_{CO2}$ (étape 218).

Sinon, la carte électronique appelle itérativement la fonction de calcul (étapes 204 à 214) jusqu'à ce que le critère de fin d'itération soit satisfait. A chaque nouvelle itération de la fonction de calcul, la carte électronique affecte, à l'étape 216, la valeur de la grandeur de sortie de l'itération précédente à la grandeur d'entrée $m_{CO2\_in}$ de la nouvelle itération.

La valeur du débit $m_{CO2}$ obtenue à l'étape 218 peut alors être utilisée par une fonction d'estimation de puissance de la carte électronique pour estimer la puissance réelle consommée par le compresseur, comme on le verra plus loin.

Dans une deuxième forme de réalisation de l'invention, on estime le débit massique de fluide frigorigène $m_{CO2}$, à partir d'un calcul préalable de l'efficacité du refroidisseur de gaz entre l'entrée $x_i$ et le point x.

L'efficacité η du refroidisseur de gaz sur la portion comprise entre $x_i$ et x est exprimée en fonction des deux écarts de températures suivants:

- l'écart entre la température $T_{gci}$ à l'entrée du refroidisseur de gaz et la température $T_{gcx}$ du fluide CO2 au point x, et

- l'écart entre la température $T_{gci}$ à l'entrée du refroidisseur de gaz et la température de l'air reçu par le refroidisseur de gaz $T_{ai}$.

L'équation B2.1 qui permet d'obtenir $\eta$ en fonction de ces paramètres est donnée dans l'annexe B.

On définit l'efficacité normale $\eta_N$ par l'équation B2.2 de l'annexe B, dans laquelle F est un facteur de correction qui prend en compte la haute pression P1.

L'efficacité $\eta$ est une fonction décroissante du débit de fluide qui traverse le refroidisseur de gaz, selon l'équation de l'annexe B 1.1, où $a_1$ et $a_2$ sont des constantes qui dépendent des caractéristiques du refroidisseur de gaz et du débit d'air reçu par ce dernier. Le débit massique de CO2 est donc lié à l'efficacité normale selon la relation B1.2 de l'annexe B.

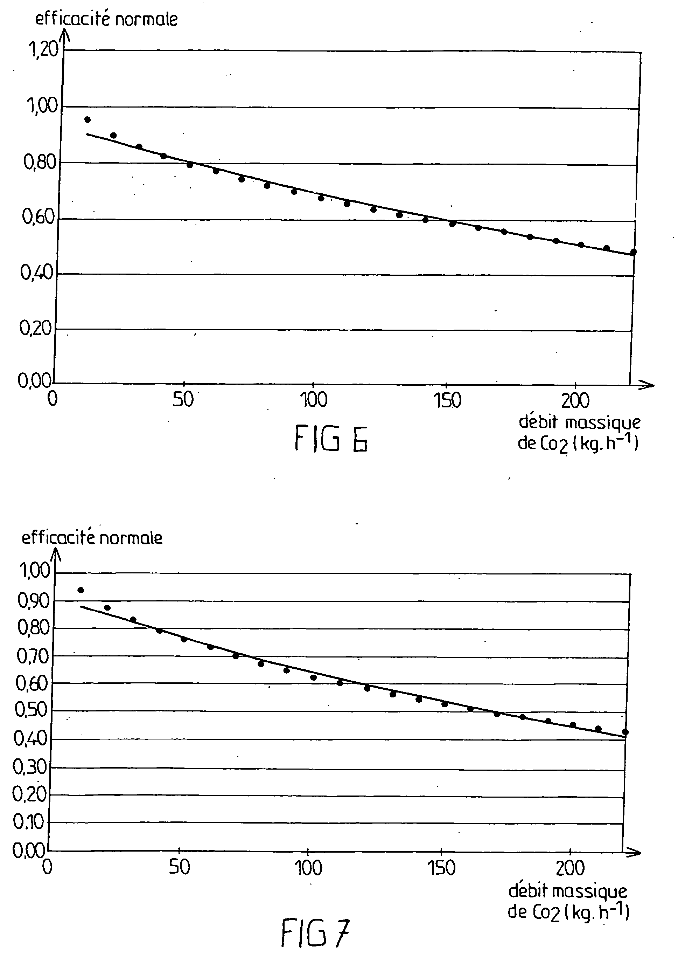

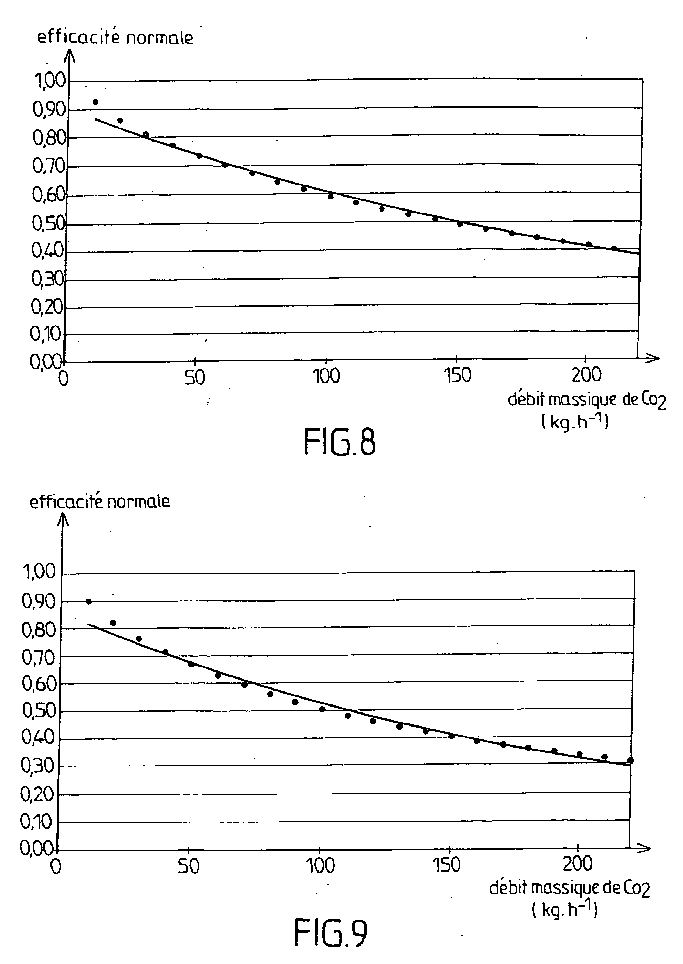

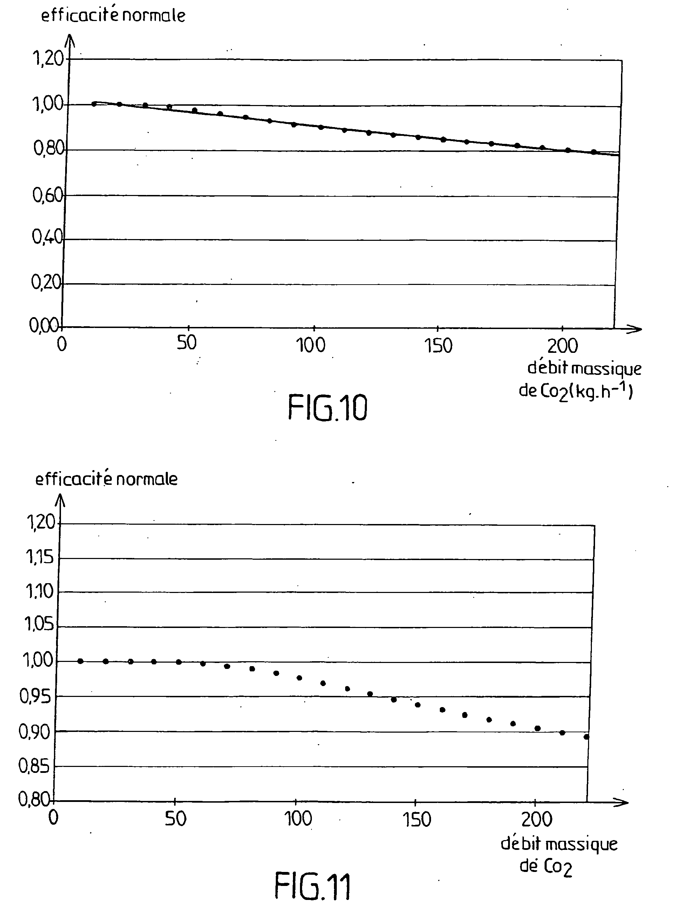

Les figures 6 à 10 représentent des exemples d'évolution de l'efficacité normale $\eta_N$ en fonction du débit de CO2, dans lesquels le point x est choisi à une distance D= 15% de L de l'entrée $x_i$. La figure 11 met en évidence le manque de précision de l'estimation du débit de fluide obtenu avec un positionnement $x=x_o$.

Sur chacune de ces figures, la courbe représentée en traits pleins représente l'évolution de $\exp(\eta_N)$ en fonction de $m_{CO2}$ et la courbe constituée de petits losanges représente l'évolution de $\eta_N$ en fonction de $m_{CO2}$.

Selon la deuxième forme de réalisation de l'invention, la fonction de calcul de la carte électronique effectue dans une première étape une estimation/mesure de la température $T_{gci}$, d'entrée du refroidisseur de gaz, de la température $T_{gcx}$ du fluide CO2 au point x choisi et de la température $T_{ai}$ de l'air reçu par le refroidisseur de gaz, comme dans l'étape 200 de la première forme de réalisation.

Dans une deuxième étape, la fonction de calcul détermine l'efficacité normale selon les équations B1 et B3 de l'annexe B.

Dans une dernière étape, la fonction de calcul résout l'équation de l'annexe B1 pour déterminer le débit massique de CO2, $m_{CO2}$, à partir de la valeur obtenue de l'efficacité normale.

L'estimation du débit massique de fluide frigorigène, obtenue selon les deux formes de réalisation de l'invention, peut être utilisée pour calculer, selon les relations de l'annexe C, la puissance mécanique absorbée. Pour cela, la carte électronique comprend une fonction d'estimation de puissance capable d'estimer la puissance absorbée par le compresseur à partir du travail de compression isentropique Wis, et de la vitesse de rotation du compresseur N. Les constantes $k_4$, $k_5$ et $k_6$ sont liées à des paramètres de fonctionnement du circuit de climatisation.

La fonction d'estimation de puissance met en oeuvre l'équation C1 de l'annexe C pour calculer le travail de compression isentropique Wis à partir :

- du taux de compression Pr représentant le rapport entre la haute pression P1 et la basse pression P0, et
- de la température d'aspiration $T_{su}$ du compresseur.

La pression P1 peut être mesurée comme décrit précédemment pour l'étape 210 de la figure 7.

La température d'aspiration $T_{su}$ peut être directement mesurée par la sonde 180 de la figure 1b, placée à l'entrée du compresseur.

En variante, la température d'aspiration $T_{su}$ peut être estimée à partir de l'efficacité $\eta_{Hxi}$ de l'échangeur interne 23, de la température d'évaporation $T_{ev}$ et de la température en sortie du refroidisseur de gaz $T_{gco}$, selon l'équation de l'annexe C3.

Selon cette variante, pour estimer la température $T_{su}$, l'installation peut comporter une sonde placée à l'entrée de l'évaporateur 13 pour mesurer la température d'évaporation $T_{ev}$, désignée par la référence 170 de la figure 1b. Cette sonde peut aussi être une sonde à thermistance, de structure classique, placée dans les ailettes de l'évaporateur. En variante, la température $T_{ev}$ peut être estimée à partir de la température d'air soufflé en sortie de l'évaporateur fournie par le régulateur d'habitacle 41. L'installation peut en outre comporter un capteur de température 150 pour mesurer $T_{gco}$. Ce capteur est placé en sortie du refroidisseur externe 11, comme indiqué sur la figure 1b.

Dans une autre variante encore, la température d'aspiration $T_{su}$ peut être estimée en fonction de la température de refoulement Td, du taux de compression Pr et d'une constante $\alpha$ selon la relation C4 de l'annexe A4.

La valeur de la basse pression P0, utilisée pour le calcul du travail isentropique Wis, peut être mesurée directement par un capteur 140 placé entre l'évaporateur et le compresseur. Cette mesure est transmise à la carte électronique 401, par la liaison 30.

La valeur de la basse pression P0 peut également être estimée à partir de la valeur de la température d'évaporation $T_{ev}$, selon la loi de saturation des fluides.

A partir de la valeur du travail isentropique Wis, de la valeur du débit de fluide supercritique $m_{CO2}$ estimée et de la vitesse de rotation N, la fonction d'estimation de puissance détermine une estimation de la puissance absorbée par le compresseur Pa, selon la relation C2 de l'annexe C.

La vitesse de rotation du compresseur N est fournie à la carte électronique par le calculateur d'injection du moteur 42, par la liaison 33 en référence à la figure 1b.

Le calculateur utilise alors la valeur estimée de la puissance réelle consommée par le compresseur pour ajuster les paramètres d'injection. Par suite la consommation de carburant est réduite.

La présente invention vise également le code logiciel qu'elle fait intervenir, tout particulièrement lorsqu'il est mis à disposition sur tout support lisible sur un ordinateur. L'expression "support lisible par ordinateur" couvre un support de stockage, par exemple magnétique ou optique, aussi bien qu'un moyen de transmission, tel qu'un signal numérique ou analogique.

## ANNEXE A

### A1. Débit massique du fluide frigorigène supercritique

$$m_{CO2} = P_k(x)/\Delta h_k(x)$$

### A2. Puissance thermique échangée entre $x_i$ et $x$

$$Pk(x) = k_{sg}.\Delta T_{LM} .1/(1 + ks_g/(2m_{ai}.Cp_a) )$$

### A3. Coefficient d'échange thermique global entre l'air et le CO2

#### A3.1- Coefficient d'échange thermique global

$$ks_g = 1/ (1/ks_a + A + 1/ks_{CO2})$$

#### A3.2- Coefficient d'échange côté air

##### A3.21-Forme générale

$$ks_a = f_1(U_{gmv}, V_a)$$

##### A3.22-Exemple

$$ks_a = (a + b(U_{gmv})^c + d.V_a)^e$$

#### A3.3- Coefficient d'échange côté fluide

##### A3.31-Forme générale

$$ks_{CO2} = f_2(m_{CO2})$$

##### A3.32-Exemple

$$ks_{CO2} = a'.(m_{CO2})^{b'}$$

**A4.différence d'enthalpie du fluide frigorigène entre $x_i$ et x**

$$\Delta h_k(x)= h(P1, T_{gci}) - h(P1, T_{gcx})$$

**A5.moyenne logarithmique de la différence de température globale entre $x_i$ et x**

$$\Delta T_{LM} = [(T_{gci} - T_{ai}) - (T_{gcx} - T_{ai})] / \log[(T_{gci} - T_{ai}) /(T_{gcx} - T_{ai})]$$

**ANNEXE B**

**B1.Relation entre l'efficacité normale $\eta_N$ et le débit massique $m_{CO2}$**

**B1.1- efficacité $\eta$ en fonction du débit $m_{CO2}$**

$$\eta = a1.m_{CO2}{}^{b1}$$

**B1.2-efficacité $\eta_N$ en fonction du débit $m_{CO2}$**

$$\exp(\eta_N) = k_1.\exp(-k_2.m_{CO2})$$

**B2.Efficacité du fluide frigorigène supercritique $\eta$**

**B2.1-Efficacité du fluide frigorigène**

$$\eta = (T_{gci} - T_{gcx}) / (T_{gci} - T_{ai})$$

**B2.2-Efficacité normale du fluide frigorigène**

$$\eta_N = F.\eta$$

**B3.Exemples de relations entre l'efficacité normale et le débit massique $m_{CO2}$ avec y= $\exp(\eta_N)$**

**B3.1-débit d'air= 2200 kg/h et x=15%.L**

$$y = 0,9296.\exp(-0,003.m_{CO2})$$

**B3.2-débit d'air= 1500 kg/h et x=15%.L**

$$y = 0,9119.\exp(-0,0036.m_{CO2})$$

**B3.3-débit d'air= 1200 kg/h et x=15%.L**

$$y = 0{,}898.\exp(-0{,}004.m_{CO2})$$

**B3.4-débit d'air= 760 kg/h et x=15%.L**

$$y = 0{,}9296.\exp(-0{,}003.m_{CO2})$$

**B3.5-débit d'air= 760 kg/h et x=100%.L**

$$y = 1{,}0247.\exp(-0{,}0013.m_{CO2})$$

**ANNEXE C**

**C1. Estimation du travail de compression fourni par le compresseur**

$$W_{is} = k_6.T_{su}.(Pr - 1)$$

**C2. Puissance mécanique absorbée par la climatisation**

$$P_a = k_4.m_{CO2}.W_{is} + k_5.N$$

**C3. Température d'aspiration $T_{su}$ dans un circuit à fluide supercritique**

$$T_{su} = \eta H_{xi} (T_{gco} - T_{ev}) + T_{ev}$$

**C4. Température d'aspiration $T_{su}$ dans un circuit à fluide supercritique**

$$T_d = T_{su}. Pr^{\alpha}, \text{ où } \alpha \text{ est une constante}$$

**Revendications**

1. Installation de climatisation pour véhicule à moteur, munie d'un circuit (10) de fluide frigorigène supercritique comprenant un compresseur (14), un refroidisseur de gaz (11) de longueur totale donnée (L), un organe de détente (12) et un évaporateur (13), le refroidisseur de gaz recevant un flux d'air (16) passant par un groupe moto-ventilateur, l'installation comprenant en outre un dispositif électronique de contrôle (401) destiné à interagir avec le circuit de fluide frigorigène (10) pour estimer une grandeur relative au fluide frigorigène ($m_{CO2}$) à partir de températures relatives au refroidisseur de gaz,
**caractérisée en ce que** ledit dispositif électronique de contrôle (401) comprend une fonction de calcul utilisant deux écarts de températures relatives au refroidisseur de gaz, dont l'un au moins est fondé sur la température du fluide frigorigène ($T_{gex}$) en un point intermédiaire choisi du refroidisseur de gaz (x).

2. Installation de climatisation selon la revendication 1, **caractérisée en ce que** le point intermédiaire choisi est situé à une distance de l'entrée ($x_i$) du refroidisseur de gaz, comprise entre 5 % et 35% de la longueur totale du refroidisseur de gaz (L).

3.  Installation de climatisation selon l'une des revendications 1 et 2, **caractérisée en ce que** les deux écarts de température sont en outre fondés sur :

    - la température du fluide frigorigène à l'entrée du refroidisseur de gaz ($T_{gci}$),
    - la température du flux d'air reçu par le refroidisseur de gaz ($T_{ai}$).

4.  Installation de climatisation selon l'une des revendications 1 à 3, **caractérisée en ce que** la grandeur relative au fluide frigorigène est le débit massique du fluide frigorigène ($m_{CO2}$).

5.  Installation de climatisation selon la revendication 4, **caractérisée en ce que** les deux écarts de températures utilisés par la fonction de calcul comprennent :

    - l'écart entre la température du fluide frigorigène à l'entrée du refroidisseur de gaz ($T_{gci}$) et la température du flux d'air reçu par le refroidisseur de gaz ($T_{ai}$);
    - l'écart entre la température du fluide frigorigène ($T_{gex}$) au point intermédiaire choisi du refroidisseur de gaz (x) et la température du flux d'air reçu par le refroidisseur de gaz ($T_{ai}$).

6.  Installation de climatisation selon la revendication 5, **caractérisée en ce que** le dispositif électronique de contrôle (401) est agencé pour appeler itérativement la fonction de calcul, à partir d'une valeur initiale donnée du débit massique du fluide frigorigène ($m_{CO2\_init}$), jusqu'à satisfaire un critère de fin d'itération, comprenant une condition de seuil sur l'écart entre la grandeur d'entrée ($m_{CO2\_in}$) et la grandeur de sortie de la fonction de calcul ($m_{CO2\_out}$).

7.  Installation de climatisation selon la revendication 6, **caractérisée en ce que** la grandeur d'entrée de la première itération de la fonction de calcul comprend ladite valeur initiale ($m_{CO2\_init}$).

8.  Installation de climatisation selon l'une des revendications 6 et 7, **caractérisée en ce que** la grandeur d'entrée ($m_{CO2\_in}$) d'une itération donnée de la fonction de calcul comprend la grandeur de sortie ($m_{CO2\_out}$) de l'itération précédente de la fonction de calcul.

9.  Installation de climatisation selon l'une des revendications 6 à 8, **caractérisée en ce que** le critère de fin d'itération est satisfait et **en ce que** la grandeur de sortie comprend la valeur du débit massique du fluide frigorigène ($m_{CO2}$).

10. Installation de climatisation selon l'une des revendications 6 à 9, **caractérisée en ce que** la fonction de calcul (401) est capable de calculer la grandeur de sortie d'une itération donnée, à partir:

    - de la puissance ($P_k(x)$) échangée entre le fluide frigorigène et le flux d'air reçu, sur une portion du refroidisseur de gaz comprise entre l'entrée du refroidisseur de gaz (xi) et le point intermédiaire choisi (x), et
    - de la différence d'enthalpie du fluide frigorigène entre l'entrée du refroidisseur de gaz et ledit point intermédiaire choisi ($\Delta h_k(x)$).

11. Installation de climatisation selon l'une des revendications 6 à 10, **caractérisée en ce que** la condition de seuil comprend le fait que l'écart entre la grandeur d'entrée ($m_{CO2\_in}$) et la grandeur de sortie ($m_{CO2\_out}$) de la fonction de calcul est inférieur à une valeur de seuil ($\varepsilon$).

12. Installation de climatisation selon la revendication 11, **caractérisée en ce que** la valeur de seuil ($\varepsilon$) est sensiblement égale à 5%.

13. Installation de climatisation selon l'une des revendications 10 à 12, **caractérisée en ce que** la fonction de calcul est apte à calculer la puissance échangée entre le fluide frigorigène et le flux d'air reçu sur ladite portion, à partir de la moyenne logarithmique de la différence de température globale ($\Delta T_{LM}$) sur ladite portion et du coefficient d'échange thermique global ($k_{sg}$) entre l'air et le fluide frigorigène.

14. Installation de climatisation selon la revendication 13, **caractérisée en ce que** la fonction de calcul est apte à calculer le coefficient d'échange thermique ($k_{sg}$) à partir de la grandeur d'entrée ($m_{CO2\_in}$), de la vitesse d'avancement ($V_a$) du véhicule et de la tension du groupe moto-ventilateur ($U_{GMV}$).

15. Installation de climatisation selon l'une des revendications 12 à 14, **caractérisée en ce que** le dispositif électronique de contrôle (401) est apte à calculer la moyenne logarithmique de la différence de température globale ($\Delta T_{LM}$) sur

ladite portion à partir des deux écarts de température.

**16.** Installation de climatisation selon l'une des revendications 10 à 15, **caractérisée en ce que** la fonction de calcul est apte à calculer la différence d'enthalpie du fluide frigorigène, entre l'entrée du refroidisseur de gaz et le point intermédiaire choisi (x), à partir :

- de la pression du fluide en sortie du compresseur (P1),
- de la température du fluide frigorigène à l'entrée du refroidisseur de gaz ($T_{gci}$), et
- de la température du fluide frigorigène au point intermédiaire choisi du refroidisseur de gaz ($T_{gcx}$).

**17.** Installation de climatisation selon la revendication 4, **caractérisée en ce que** les deux écarts de températures utilisés par la fonction de calcul comprennent :

- l'écart entre la température du fluide frigorigène à l'entrée du refroidisseur de gaz ($T_{gci}$) et la température du fluide frigorigène ($T_{gex}$) au point intermédiaire choisi du refroidisseur de gaz (x),
- l'écart entre la température du fluide frigorigène à l'entrée du refroidisseur de gaz ($T_{gci}$) et la température du flux d'air reçu par le refroidisseur de gaz ($T_{ai}$).

**18.** Installation de climatisation selon l'une des revendications précédentes, **caractérisée en ce qu'**elle comporte une sonde de température placée au point intermédiaire choisi du refroidisseur de gaz (x) et propre à fournir une mesure de la température du fluide frigorigène ($T_{gex}$) au point intermédiaire choisi.

**19.** Installation de climatisation selon l'une des revendications 3 à 18, **caractérisée en ce qu'**elle comporte une sonde de température (130), placée à l'entrée du refroidisseur de gaz et propre à fournir une mesure de la température du fluide frigorigène à l'entrée du refroidisseur de gaz ($T_{gci}$).

**20.** Installation de climatisation selon l'une des revendications 3 à 18, **caractérisée en ce que** le dispositif de contrôle comprend une fonction d'estimation de température de fluide capable de calculer une estimation de la température du fluide frigorigène à l'entrée du refroidisseur de gaz ($T_{gci}$) à partir :

- de la pression du fluide en entrée du compresseur (P0),
- de la température du fluide à l'entrée du compresseur ($T_{su}$), et
- de la pression du fluide en sortie du compresseur (P1).

**21.** Installation de climatisation selon l'une des revendications 3 à 20, **caractérisée en qu'**elle comporte une sonde (120), placée entre le groupe moto-ventilateur (15) et le refroidisseur de gaz (11), propre à fournir une mesure de la température du flux d'air reçu par le refroidisseur de gaz ($T_{ai}$).

**22.** Installation de climatisation selon l'une des revendications 3 à 20, **caractérisée en ce que** le dispositif électronique de contrôle (401) comprend une fonction d'estimation de température d'air capable de calculer la température du flux d'air reçu par le refroidisseur de gaz ($T_{ai}$) à partir :

- de la température de l'air extérieur ($T_{ext}$) et
- de la vitesse d'avancement ($V_a$) du véhicule.

**23.** Installation de climatisation selon la revendication 22, **caractérisée en ce** en qu'elle comporte une sonde propre à fournir une mesure de la température du flux d'air extérieur ($T_{ext}$).

**24.** Installation de climatisation selon l'une des revendications 4 à 23, **caractérisée en ce que** le dispositif électronique de contrôle comporte une fonction d'estimation de puissance capable d'estimer la puissance absorbée par le compresseur à partir:

- du taux de compression (Pr), et
- de la température du fluide frigorigène en 'entrée du compresseur ($T_{su}$).

**25.** Procédé d'estimation du débit massique d'un fluide frigorigène supercritique circulant dans un circuit de climatisation (10), ledit circuit comprenant un compresseur (14), un refroidisseur de gaz (11) de longueur totale donnée (L), un organe de détente (12) et un évaporateur (13), le refroidisseur de gaz recevant un flux d'air (16) passant par un groupe moto-ventilateur, **caractérisé en ce qu'**il comprend les étapes suivantes, pour une valeur initiale donnée du débit massique du fluide frigorigène ($m_{CO2\_init}$):

    a) calculer

        - une estimation de l'écart entre la température du fluide frigorigène à l'entrée du refroidisseur de gaz ($T_{gci}$) et la température du flux d'air reçu par le refroidisseur de gaz ($T_{ai}$);
        - une estimation de l'écart entre la température du fluide frigorigène ($T_{gcx}$) au point intermédiaire choisi du refroidisseur de gaz (x) et la température du flux d'air reçu par le refroidisseur de gaz ($T_{ai}$)

    b) calculer une grandeur de sortie ($m_{CO2\_out}$), à partir d'une grandeur d'entrée ($m_{CO2\_in}$) et des valeurs fournies par l'étape a);
    c) déterminer si l'écart entre la grandeur de sortie calculée à l'étape b) et la grandeur d'entrée est inférieur à une valeur de seuil prédéfinie ($\varepsilon$).

26. Procédé selon la revendication 25, **caractérisé en ce que** la grandeur d'entrée ($m_{CO2\_in}$) comprend la valeur initiale du débit de fluide frigorigène ($m_{CO2\_init}$), à la première itération de l'étape a).

27. Procédé selon l'une des revendications 25 et 26, **caractérisé en ce que** les étapes a) à c) sont réitérées avec une grandeur d'entrée ($m_{CO2\_in}$) égale à la grandeur de sortie ($m_{CO2\_out}$) calculée à l'étape c) précédente, si l'étape c) n'est pas vérifiée.

28. Procédé selon l'une des revendications 26 à 27, **caractérisé en ce que** la grandeur de sortie comprend la valeur du débit massique de fluide frigorigène ($m_{CO2}$), si l'étape c) est vérifiée.

**Claims**

1. Air conditioning installation for a motorised vehicle, equipped with a circuit (10) of super-critical refrigerating liquid comprising a compressor (14), a gas cooler (11) of a given total length (L), an expansion unit (12) and an evaporator (13), wherein the gas cooler receives an air flow (16) passing through engine blowers, the installation further comprising an electronic control device (401) designed to interact with the refrigerating liquid circuit (10) to make an estimate of the relative size of the refrigerating liquid ($m_{CO2}$) from the relative temperatures of the gas cooler, **characterised in that** said electronic control device (401) comprises a calculation function which uses two temperature differences relative to the gas cooler, of which at least one is based on the temperature of the refrigerating liquid ($T_{gcx}$) at a selected intermediate point of the gas cooler (x).

2. Air conditioning installation according to claim 1, **characterised in that** the chosen intermediate point is situated at a distance from the inlet ($x_i$) of the gas cooler, of between 5% and 35% of the total length of the gas cooler (L).

3. Air conditioning installation according to any of claims 1 and 2, **characterised in that** the two differences in temperature are further based on:

    - the temperature of the refrigerating liquid at the inlet of the gas cooler ($T_{gci}$),
    - the temperature of the air flow received by the gas cooler ($T_{ai}$).

4. Air conditioning installation according to any of claims 1 to 3, **characterised in that** the relative size of the refrigerating liquid is the mass volume flow rate of the refrigerating liquid ($m_{co2}$).

5. Air conditioning installation according to claim 4, **characterised in that** the two differences in temperature used by the calculation function comprise:

    - the difference between the temperature of the refrigerating liquid at the inlet of the gas cooler ($T_{gci}$) and the temperature of the air flow received by the gas cooler ($T_{ai}$);
    - the difference between the temperature of the refrigerating liquid ($T_{gcx}$) at the chosen intermediate point of the gas cooler (x) and the temperature of the air flow received by the gas cooler ($T_{ai}$).

6. Air conditioning installation according to claim 5, **characterised in that** the electronic control device (401) is fitted so that it calls iteratively the calculation function, from a given initial value of the mass volume flow rate of the refrigerating liquid ($m_{co2\_init}$) until it satisfies an end of iteration criterion, comprising a threshold condition on the difference between the input size ($m_{co2\_in}$) and the output size of the calculation function ($m_{co2\_out}$).

7. Air conditioning installation according to claim 6, **characterised in that** the input size of the first iteration of the calculation function comprises said initial value ($m_{co2\_init}$).

8. Air conditioning installation according to any of claims 6 and 7, **characterised in that** the input size ($m_{co2-in}$) of a given iteration of the calculation function comprises the output size ($m_{co2\_out}$) of the previous iteration of the calculation function.

9. Air conditioning installation according to any of claims 6 to 8, **characterised in that** the end of iteration criterion is satisfied and **in that** the output size comprises the value of the mass volume flow rate of the refrigerating liquid ($m_{co2}$).

10. Air conditioning installation according to any of claims 6 to 9, **characterised in that** the calculation function (401) is capable of calculating the output size of a given iteration, from:

- the power ($P_k(x)$) exchanged between the refrigerating liquid and the air flow received, on a portion of the gas cooler between the inlet of the gas cooler (xi) and the chosen intermediate point (x), and
- the difference of enthalpy of the refrigerating liquid between the inlet of the gas cooler and said chosen intermediate point ($\Delta h_k(x)$).

11. Air conditioning installation according to any of claims 6 to 10, **characterised in that** the threshold condition comprises the fact that the difference between the input size ($m_{co2\_in}$) and the output size ($m_{co2\_out}$) of the calculation function is lower than a threshold value ($\varepsilon$) .

12. Air conditioning installation according to claim 11, **characterised in that** the threshold value ($\varepsilon$) is substantially equal to 5%.

13. Air conditioning installation according to any of claims 10 to 12, **characterised in that** the calculation function is capable of calculating the power exchanged between the refrigerating liquid and the air flow received on said portion, from the logarithmic mean of the overall difference in temperature ($\Delta T_{LM}$) on said portion and from the overall thermal exchange coefficient ($k_{sg}$) between the air and the refrigerating liquid.

14. Air conditioning installation according to claim 13, **characterised in that** the calculation function is capable of calculating the thermal exchange coefficient ($k_{sg}$) from the input size ($m_{co2\_n}$) of the speed of travel ($V_a$) of the vehicle and from the voltage of the engine blowers ($U_{GMV}$).

15. Air conditioning installation according to any of claims 12 to 14, **characterised in that** the electronic control device (401) is capable of calculating the logarithmic mean of the overall difference in temperature ($\Delta T_{LM}$) on said portion from the two differences in temperature.

16. Air conditioning installation according to any of claims 10 to 15, **characterised in that** the calculation function is capable of calculating the difference in enthalpy of the refrigerating liquid, between the inlet of the gas cooler and the chosen intermediate point (x), from:

- the pressure of the liquid at the outlet of the compressor (P1),
- the temperature of the refrigerating liquid at the inlet of the gas cooler ($T_{gci}$), and
- the temperature of the refrigerating liquid at the chosen intermediate point of the gas cooler ($T_{gcx}$).

17. Air conditioning installation according to claim 4, **characterised in that** the two differences in temperature used by the calculation function comprise:

- the difference between the temperature of the refrigerating liquid at the inlet of the gas cooler ($T_{gci}$) and the temperature of the refrigerating liquid ($T_{gcx}$) at the chosen intermediate point of the gas cooler (x),
- the difference between the temperature of the refrigerating liquid at the inlet of the gas cooler ($T_{gci}$) and the temperature of the air flow received by the gas cooler ($T_{ni}$).

18. Air conditioning installation according to any of the previous claims, **characterised in that** it comprises a temperature detector positioned at the chosen intermediate point of the gas cooler (x) and capable of providing a measurement of the temperature of the refrigerating liquid ($T_{gcx}$) at the chosen intermediate point.

19. Air conditioning installation according to any of claims 3 to 18, **characterised in that** it comprises a temperature detector (130), positioned at the inlet of the gas cooler and capable of providing a measurement of the temperature of the refrigerating liquid at the inlet of the gas cooler ($T_{gci}$).

20. Air conditioning installation according to any of claims 3 to 18, **characterised in that** the control device comprises a liquid temperature estimation function capable of calculating an estimated temperature of the refrigerating liquid at the inlet of the gas cooler ($T_{gci}$) from:

  - the pressure of the liquid at the inlet of the compressor (P0),
  - the temperature of the liquid at the inlet of the compressor ($T_{su}$), and
  - the pressure of the liquid at the outlet of the compressor (P1).

21. Air conditioning installation according to any of claims 3 to 20, **characterised in that** it comprises a pickup (120) positioned between the engine blowers (15) and the gas cooler (11), capable of providing a measurement of the temperature of the air flow received by the gas cooler ($T_{ai}$).

22. Air conditioning installation according to any of claims 3 to 20, **characterised in that** the electronic control device (401) comprises an air temperature estimation function capable of calculating the temperature of the air flow received by the gas cooler ($T_{ai}$) from:

  - the temperature of the outside air ($T_{ext}$) and
  - the travel speed ($V_a$) of the vehicle.

23. Air conditioning installation according to claim 22, **characterised in that** it comprises a pickup capable of providing a measurement of the temperature of the outside air flow ($T_{ext}$).

24. Air conditioning installation according to any of claims 4 to 23, **characterised in that** the electronic control device comprises a power estimation function capable of estimating the power absorbed by the compressor from:

  - the rate of compression (Pr), and
  - the temperature of the refrigerating liquid at the inlet of the compressor ($T_{su}$).

25. Process for estimating the mass volume flow rate of a super-critical refrigerating liquid circulating in an air conditioning circuit (10), wherein said circuit comprises a compressor (14), a gas cooler (11) of a given total length (L), an expansion unit (12) and an evaporator (13), wherein the gas cooler receives an air flow (16) passing through engine blowers, **characterised in that** it comprises the following steps, for a given initial value of the mass volume flow rate of the refrigerating liquid ($m_{co2\_init}$) :

  a) calculating:

  - an estimation of the difference between the temperature of the refrigerating liquid at the inlet of the gas cooler ($T_{gci}$,) and the temperature of the air flow received by the gas cooler ($T_{ai}$);
  - an estimation of the difference between the temperature of the refrigerating liquid ($T_{gcx}$) at the chosen intermediate point of the gas cooler (x) and the temperature of the air flow received by gas cooler ($T_{ai}$)

  b) calculating an output size ($m_{co2\_out}$) from an input size ($m_{co2\_in}$) and the values provided by step a); c) determining if the difference between the output size calculated in step b) and the input size is below a predefined threshold value ($\varepsilon$).

26. Process according to claim 25, **characterised in that** the input size ($m_{co2\_in}$) comprises the initial flow rate value of the refrigerating liquid ($m_{co2\_init}$) at the first iteration of step a).

27. Process according to any of claims 25 and 26, **characterised in that** steps a) to c) are reiterated with an input size ($m_{co2\_in}$) equal to the output size ($m_{Co2\_out}$) calculated previously in step c), if step c) is not checked.

**28.** Process according to any of claims 26 to 27, **characterised in that** the output size comprises the value of the mass volume flow rate of the refrigerating liquid ($m_{co2}$), if step c) is checked.

**Patentansprüche**

**1.** Klimatisierungsanlage für ein Kraftfahrzeug, mit einem Kreislauf (10) eines superkritischen Kältemittels, der einen Verdichter (14), einen Gaskühler (11) mit einer gegebenen Gesamtlänge (L), eine Expansionsvorrichtung (12) und einen Verdampfer (13) umfasst, wobei der Gaskühler einen Luftstrom (16) aufnimmt, der eine Gebläseeinheit durchläuft, wobei die Anlage des Weiteren eine elektronische Prüfvorrichtung (401) zum Interagieren mit dem Kältemittelkreislauf (10) umfasst, um ausgehend von Temperaturen bezogen auf den Gaskühler eine Größe bezogen auf das Kältemittel ($m_{CO2}$) abzuschätzen,
**dadurch gekennzeichnet, dass** die besagte elektronische Prüfvorrichtung (401) eine Rechenfunktion umfasst, die zwei Temperaturunterschiede bezogen auf den Gaskühler verwendet, wovon zumindest einer auf der Temperatur des Kältemittels ($T_{gex}$) an einem gewählten Zwischenpunkt des Gaskühlers (x) basiert.

**2.** Klimatisierungsanlage nach Anspruch 1, **dadurch gekennzeichnet, dass** sich der gewählte Zwischenpunkt auf einer Distanz vom Eintritt ($x_i$) des Gaskühlers entfernt befindet, die zwischen 5% und 35% der Gesamtlänge des Gaskühlers (L) beträgt.

**3.** Klimatisierungsanlage nach einem der Ansprüche 1 und 2, **dadurch gekennzeichnet, dass** die zwei Temperaturunterschiede des Weiteren auf Folgendem basieren:

 - der Temperatur des Kältemittels am Eintritt des Gaskühlers ($T_{gci}$),
 - der Temperatur des Luftstroms, der vom Gaskühler aufgenommen wird ($T_{ai}$).

**4.** Klimatisierungsanlage nach einem der Ansprüche 1 bis 3, **dadurch gekennzeichnet, dass** die Größe bezogen auf das Kältemittel der Massenstrom des Kältemittels ($m_{CO2}$) ist.

**5.** Klimatisierungsanlage nach Anspruch 4, **dadurch gekennzeichnet, dass** die zwei Temperaturunterschiede, die von der Rechenfunktion herangezogen werden, Folgendes umfassen:

 - den Unterschied zwischen der Temperatur des Kältemittels am Eintritt des Gaskühlers ($T_{gci}$) und der Temperatur des Luftstroms, der vom Gaskühler aufgenommen wird ($T_{ai}$) ;
 - den Unterschied zwischen der Temperatur des Kältemittels ($T_{gex}$) am gewählten zwischenpunkt des Gaskühlers (x) und der Temperatur des Luftstroms, der vom Gaskühler aufgenommen wird ($T_{ai}$).

**6.** Klimatisierungsanlage nach Anspruch 5, **dadurch gekennzeichnet, dass** die elektronische Prüfvorrichtung (401) angeordnet ist, um die Rechenfunktion iterativ aufzurufen, und zwar ausgehend von einem gegebenen Ausgangswert des Massenstroms des Kältemittels ($m_{CO2\_init}$), bis ein Kriterium zur Beendigung der Iteration erfüllt wird, umfassend eine Schwellenbedingung für den Unterschied zwischen der Eintrittsgröße ($m_{CO2\_in}$) und der Austrittsgröße der Rechenfunktion ($m_{CO2\_out}$).

**7.** Klimatisierungsanlage nach Anspruch 6, **dadurch gekennzeichnet, dass** die Eintrittsgröße der ersten Iteration der Rechenfunktion den besagten Ausgangswert ($m_{CO2\_init}$) umfasst.

**8.** Klimatisierungsanlage nach einem der Ansprüche 6 und 7, **dadurch gekennzeichnet, dass** die Eintrittsgröße ($m_{CO2\_in}$) einer gegebenen Iteration der Rechenfunktion die Austrittsgröße ($m_{CO2\_out}$) der vorhergehenden Iteration der Rechenfunktion umfasst.

**9.** Klimatisierungsanlage nach einem der Ansprüche 6 bis 8, **dadurch gekennzeichnet, dass** das Kriterium zur Beendigung der Iteration erfüllt wird, und dass die Austrittsgröße den Wert des Massenstroms des Kältemittels ($m_{CO2}$) umfasst.

**10.** Klimatisierungsanlage nach einem der Ansprüche 6 bis 9, **dadurch gekennzeichnet, dass** die Rechenfunktion (401) imstande ist, die Austrittsgröße einer gegebenen Iteration zu berechnen, und zwar ausgehend:

 - von der Leistung ($P_k(x)$), die zwischen dem Kältemittel und dem aufgenommenen Luftstrom ausgetauscht

**17**

wird, und zwar auf einem Abschnitt des Gaskühlers, der sich zwischen dem Eintritt des Gaskühlers (xi) und dem gewählten Zwischenpunkt (x) befindet, und

- vom Enthalpieunterschied des Kältemittels zwischen dem Eintritt des Gaskühlers und dem besagten gewählten Zwischenpunkt ($\Delta h_k(x)$).

**11.** Klimatisierungsanlage nach einem der Ansprüche 6 bis 10, **dadurch gekennzeichnet, dass** die Schwellenbedingung die Tatsache umfasst, dass der Unterschied zwischen der Eintrittsgröße ($m_{CO2\_in}$) und der Austrittsgröße ($m_{CO2\_out}$) der Rechenfunktion niedriger als ein Schwellenwert ($\varepsilon$) ist.

**12.** Klimatisierungsanlage nach Anspruch 11, **dadurch gekennzeichnet, dass** der Schwellenwert ($\varepsilon$) im Wesentlichen gleich 5% ist.

**13.** Klimatisierungsanlage nach einem der Ansprüche 10 bis 12, **dadurch gekennzeichnet, dass** die Rechenfunktion imstande ist, die Leistung zu berechnen, die zwischen dem Kältemittel und dem auf dem besagten Abschnitt aufgenommenen Luftstrom ausgetauscht wird, und zwar ausgehend vom logarithmischen Mittelwert des Gesamttemperaturunterschieds ($\Delta T_{LM}$) auf dem besagten Abschnitt und des Koeffizienten des Gesamtwärmeaustausches ($k_{sg}$) zwischen der Luft und dem Kältemittel.

**14.** Klimatisierungsanlage nach Anspruch 13, **dadurch gekennzeichnet, dass** die Rechenfunktion imstande ist, den Wärmeaustauschkoeffizienten ($k_{sg}$) ausgehend von der Eintrittsgröße ($m_{CO2\_in}$), der Fortbewegungsgeschwindigkeit ($V_a$) des Fahrzeuges und der Spannung der Gebläseeinheit ($U_{GMV}$) zu berechnen.

**15.** Klimatisierungsanlage nach einem der Ansprüche 12 bis 14, **dadurch gekennzeichnet, dass** die elektronische Prüfvorrichtung (401) imstande ist, den logarithmischen Mittelwert des Gesamttemperaturunterschieds ($\Delta T_{LM}$) auf dem besagten Abschnitt ausgehend von den zwei Temperaturunterschieden zu berechnen.

**16.** Klimatisierungsanlage nach einem der Ansprüche 10 bis 15, **dadurch gekennzeichnet, dass** die Rechenfunktion imstande ist, den Enthalpieunterschied des Kältemittels zwischen dem Eintritt des Gaskühlers und dem gewählten Zwischenpunkt (x) zu berechnen, und zwar ausgehend:

- vom Druck des Mittels am Austritt des Verdichters (P1),
- von der Temperatur des Kältemittels am Eintritt des Gaskühlers ($T_{gci}$), und
- von der Temperatur des Kältemittels am gewählten Zwischenpunkt des Gaskühlers ($T_{gex}$).

**17.** Klimatisierungsanlage nach Anspruch 4, **dadurch gekennzeichnet, dass** die zwei Temperaturunterschiede, die von der Rechenfunktion herangezogen werden, Folgendes umfassen:

- den Unterschied zwischen der Temperatur des Kältemittels am Eintritt des Gaskühlers ($T_{gci}$) und der Temperatur des Kältemittels ($T_{gex}$) am gewählten Zwischenpunkt des Gaskühlers (x),
- den Unterschied zwischen der Temperatur des Kältemittels am Eintritt des Gaskühlers ($T_{gci}$) und der Temperatur des Luftstroms, der vom Gaskühler aufgenommen wird ($T_{ai}$).

**18.** Klimatisierungsanlage nach einem der vorhergehenden Ansprüche, **dadurch gekennzeichnet, dass** sie einen Temperaturfühler umfasst, der am gewählten Zwischenpunkt des Gaskühlers (x) angeordnet ist und dazu dient, eine Messung der Temperatur des Kältemittels ($T_{gex}$) am gewählten Zwischenpunkt zu liefern.

**19.** Klimatisierungsanlage nach einem der Ansprüche 3 bis 18, **dadurch gekennzeichnet, dass** sie einen Temperaturfühler (130) umfasst, der am Eintritt des Gaskühlers angeordnet ist und dazu dient, eine Messung der Temperatur des Kältemittels am Eintritt des Gaskühlers ($T_{gci}$) zu liefern.

**20.** Klimatisierungsanlage nach einem der Ansprüche 3 bis 18, **dadurch gekennzeichnet, dass** die Prüfvorrichtung eine Funktion zur Schätzung der Temperatur des Mittels umfasst, die imstande ist, eine Schätzung der Temperatur des Kältemittels am Eintritt des Gaskühlers ($T_{gci}$) zu berechnen, und zwar ausgehend:

- vom Druck des Mittels am Eintritt des Verdichters (P0),
- von der Temperatur des Mittels am Eintritt des Verdichters ($T_{su}$), und
- vom Druck des Mittels am Austritt des Verdichters (P1).

**21.** Klimatisierungsanlage nach einem der Ansprüche 3 bis 20, **dadurch gekennzeichnet, dass** sie einen Fühler (120) umfasst, der zwischen der Gebläseeinheit (15) und dem Gaskühler (11) angeordnet ist und dazu dient, eine Messung der Temperatur des Luftstroms, der vom Gaskühler aufgenommen wird ($T_{ai}$), zu liefern.

**22.** Klimatisierungsanlage nach einem der Ansprüche 3 bis 20, **dadurch gekennzeichnet, dass** die elektronische Prüfvorrichtung (401) eine Funktion zur Schätzung der Lufttemperatur umfasst, die imstande ist, die Temperatur des Luftstroms, der vom Gaskühler aufgenommen wird ($T_{ai}$), zu berechnen, und zwar ausgehend:

- von der Außentemperatur ($T_{ext}$) und
- von der Fortbewegungsgeschwindigkeit ($V_a$) des Fahrzeuges.

**23.** Klimatisierungsanlage nach Anspruch 22, **dadurch gekennzeichnet, dass** sie einen Fühler umfasst, der dazu dient, eine Messung der Außentemperatur ($T_{ext}$) zu liefern.

**24.** Klimatisierungsanlage nach einem der Ansprüche 4 bis 23, **dadurch gekennzeichnet, dass** die elektronische Prüfvorrichtung eine Funktion zur Schätzung der Leistung umfasst, die imstande ist, die vom Verdichter aufgenommene Leistung abzuschätzen, und zwar ausgehend:

- vom Verdichtungsgrad (Pr), und
- von der Temperatur des Kältemittels am Eintritt des Verdichters ($T_{su}$).

**25.** Verfahren zur Schätzung des Massenstroms eines superkritischen Kältemittels, das in einem Klimatisierungskreislauf (10) zirkuliert, wobei der besagte Kreislauf einen Verdichter (14), einen Gaskühler (11) mit einer gegebenen Gesamtlänge (L), eine Expansionsvorrichtung (12) und einen Verdampfer (13) umfasst, wobei der Gaskühler einen Luftstrom (16) aufnimmt, der eine Gebläseeinheit durchläuft, **dadurch gekennzeichnet, dass** es folgende Schritte umfasst, und zwar für einen gegebenen Ausgangswert des Massenstroms des Kältemittels ($m_{CO2\_init}$):

a) berechnen

- einer Schätzung des Unterschiedes zwischen der Temperatur des Kältemittels am Eintritt des Gaskühlers ($Tg_{ci}$) und der Temperatur des Luftstroms, der vom Gaskühler aufgenommen wird ($T_{ai}$) ;
- einer Schätzung des Unterschiedes zwischen der Temperatur des Kältemittels ($T_{gex}$) am gewählten Zwischenpunkt des Gaskühlers (x) und der Temperatur des Luftstroms, der vom Gaskühler aufgenommen wird ($T_{ai}$);

b) berechnen einer Austrittsgröße ($m_{CO2\_out}$), und zwar ausgehend von einer Eintrittsgröße ($m_{CO2\_in}$) und den Werten, die durch Schritt a) geliefert werden;

c) bestimmen, ob der Unterschied zwischen der in Schritt b) berechneten Austrittsgröße und der Eintrittsgröße niedriger ist als ein im Voraus festgelegter Schwellenwert ($\varepsilon$).

**26.** Verfahren nach Anspruch 25, **dadurch gekennzeichnet, dass** die Eintrittsgröße ($m_{CO2\_in}$) den Ausgangswert des Massenstroms des Kältemittels ($m_{CO2\_init}$) umfasst, und zwar bei der ersten Iteration des Schrittes a).

**27.** Verfahren nach einem der Ansprüche 25 und 26, **dadurch gekennzeichnet, dass** die Schritte a) bis c) mit einer Eintrittsgröße ($m_{CO2\_in}$) wiederholt werden, die gleich der Austrittsgröße ($m_{CO2\_out}$) ist, die im vorhergehenden Schritt c) berechnet wurde, wenn Schritt c) nicht verifiziert wird.

**28.** Verfahren nach einem der Ansprüche 26 bis 27, **dadurch gekennzeichnet, dass** die Austrittsgröße den Wert des Massenstroms des Kältemittels ($m_{CO2}$) umfasst, wenn Schritt c) verifiziert wird.

FIG.1A

FIG.2

FIG.1b

FIG.3

FIG.4

Étape initiale : estimer/mesurer $T_{gci}$, $T_{ai}$, $T_{gcx}$ — 200

Choix de $m_{co2\_init}$ — 202

$m_{co2\_in} = m_{co2\_init}$

Calculer le coefficient d'échange global $ks_g$ à partir de $U_{gmv}$, $V_a$ et $m_{co2\_in}$ — 204

Calculer la moyenne logarithmique $\Delta T_{LM}$ en fonction de $(T_{gci} - T_{ai})$ et $(T_{gcx} - T_{ai})$ — 206

Calculer la puissance échangée entre le fluide et l'air $P_k(X)$ à partir de $\Delta T_{LM}$ et $ks_g$ — 208

Calculer la différence d'enthalpie du CO2, $\Delta h_k(X)$, à partir de HP, $T_{gci}$ et $T_{gcx}$ — 210

Calculer le débit de CO2 $m_{co2\_out}$ à partir de $P_k(X)$ et $\Delta h_k(X)$ — 212

$|m_{co2\_out} - m_{co2\_in}| < \varepsilon$? — 214

N

$m_{co2\_in} = m_{co2}$ — 216

O

$m_{co2} = m_{co2\_out}$ — 218

FIG.5

FIG 6

FIG 7

FIG.8

FIG.9

efficacité normale

FIG.10

efficacité normale

FIG.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0116568

- WO 0116568 A